# EUROPEAN PATENT APPLICATION

(11) **EP 4 074 400 A1**
(43) Date of publication of application: **19.10.2022**
(21) Application number: 22167674.5
(22) Date of filing: 11.04.2022
(51) Int. Cl.: B01D 33/06, B01D 33/067, B01D 33/333

(54) **SCREENING APPARATUS FOR REMOVING SOLID MATERIAL FROM FLOWING LIQUID AND ASSOCIATED SCREENING PANEL**

(30) Priority: 15.04.2021 US 202163175216 P
(71) Applicant: Ovivo Inc., Montreal, QC H3A 2R7 (CA)
(72) Inventor: HOLINDRAKE, Jared, COTTONWOOD HEIGHTS, UT 84121 (US); AVILES, Abner B., PLEASANT GROVE, UT 84062 (US)
(74) Representative: Dall'Olio, Christian

(57) **Abstract**

A screening panel for an apparatus for removing solid material from a flowing liquid, where the screening panel is mountable to a conveyor of the apparatus for travel around an endless path passing into and out of the flowing liquid. The screening panel is molded from a polymeric material and provided with a plurality of apertures each extending through the screening panel from a first major surface to an opposing second major surface. The apertures each have a tapered hexagonal cross-section.

## Description

### BACKGROUND OF THE INVENTION

The present invention relates generally to the field of water purification and treatment and particularly involves apparatus including screening panels for removing solid material from a liquid in an early stage of a water purification system. Such screening panels are to be found, for example, in band screens and rotary screens in water and waste treatment plants, and are relatively large having an overall effective screening area that would usually be substantially more than 500 cm².

At first glance, designing screening panels for such a water purification process is straightforward engineering. One requires no more than a panel with a large number of suitably sized apertures. In a typical case, a panel measures more than 20 x 30 cm and, even in the case where the apertures were relatively large, there would be more than 250 apertures on the panel. A screening apparatus might have 4 to 80 panels.

Such screening panels were originally fabricated as perforated steel plates or from woven or welded wire mesh. Where steel plate was used, the apertures were punched or drilled out the steel plate.

U.S. Patent No. 5,407,563 discloses screening panels molded from a thermoplastic or polymeric material, the apertures being formed during the molding process. The prior art as embodied in U.S. Patent No. 5,407,563 teaches apertures of circular cross-section so as to ensure uniformity of screening. This has been the standard geometry in wastewater screening panels for decades.

The present invention aims to provide an improved wastewater screening apparatus of the above described type, particularly with improved screening panels. The present invention contemplates a wastewater screening panel for deployment in wastewater treatment facilities that enables increased liquid flow throughput without compromising structural integrity of the panel.

A screening apparatus for removing solid material from a flowing liquid, exemplarily useful in wastewater treatment facilities, comprises, in accordance with the present invention, a plurality of screening panels and a conveyor, the screening panels being mounted to the conveyor for travel around an endless path passing into and out of the flowing liquid. Each of the screening panels has a first major surface and a second major surface in parallel relation to one another. Each of the screening panels is mounted to the conveyor so that the first major surface faces the flowing liquid, and the second major surface faces in a direction of flow of the flowing liquid. Each screening panel is molded from a polymeric material and is provided with a plurality of apertures. The apertures each extend through a respective panel from the first major surface to the second major surface thereof to thereby permit liquid flow through the apertures. The apertures each have a hexagonal cross-section in at least one of the first major surface and the second major surface. Each of the apertures has a first maximum transverse dimension at the first major surface, the transverse dimension (e.g. width) of the apertures increasing progressively from the first major surface towards the second major surface and being of a second maximum transverse dimension greater than the first maximum transverse dimension at the second major surface of the respective screening panel.

In a preferred embodiment of the invention, the screening panels each have a thickness of approximately 9 mm and the apertures have a taper of 0.5 mm from the second major surface to the first major surface, while the apertures each have a first maximum transverse dimension of 3.5 mm, vertex to opposing vertex, at the second major surface and a second maximum transverse dimension of 3 mm, vertex to opposing vertex, at the first major surface.

Preferably, the apertures are equispaced from each neighboring or adjacent aperture. The apertures form a honeycomb grid or pattern, each of the apertures internal to the honeycomb pattern having six angularly equispaced neighbor apertures.

Each of the screening panels pursuant to the present invention provides an increase in aggregate flow-through area of 9-16% over a screening panel of equal size having conical or cross-sectionally circular apertures.

In accordance with another feature of the invention, the apertures have a hexagonal cross-section along their entire lengths from the first major surface to the second major surface. It is believed that the longitudinally continuous hexagonal transverse cross-section strengthens the screening panels, creating a web of stress lines, facilitating a maximization of flow throughput per unit area of the screens.

The present invention enables a simple and inexpensive retrofit of existing wastewater screening apparatus to increase throughput and operating efficiency. If screening panels with hexagonal through holes in accordance with the invention replace conventional screening panels with circular or cylindrical apertures wastewater flow rates in existing wastewater treatment facilities can increase. The improvement in function can be achieved without replacing entire machines, which provides obvious economic benefits. Concomitantly, new wastewater screening apparatus having the same throughput as existing machines can be manufactured for less expense, attributable at least in major part to reduction in machine size, which entails decreased expenditure for raw materials such as metals.

The present invention enables substantial increase in liquid flow-through cross-sectional area, enhancing operational efficiencies and concomitant economics. This is surprising in that one would expect the irregularities in hexagonal geometries to lead to reduced structural strength and increased failure rates. It is to be surmised that the extension of the hexagonal cross section of the apertures from one major surface to the opposite surface of the screening panels lends strength to the panels that would not exist where the apertures have smooth circular or elliptical cross-sections from one end to the other.

The present invention enables an optimization of fluid flow rate and a concomitant maximization of panel structural integrity owing to the tapered honeycomb design. Extending the hexagonal aperture cross-section across the entire width of a screening panel for all of the apertures increases panel structural strength over that of conventional panels with conical or tapered cylindrical apertures. Tapering of the hexagonal apertures
FIG. 1 is a rear elevational view of a screening panel in accordance with the present invention for incorporation into a drum screen apparatus pursuant to the invention.
FIG. 2A is a partial sectional view of the panel along line II--II of FIG. 1, on a larger scale than FIG. 1.
FIG. 2B is a partial rear elevation view of the screening panel of FIGS. 1 and 2, showing the arrangement of apertures or apertures, on a downstream side of the screen panel.
FIG. 3 is a schematic perspective view of a drum screen pursuant to the invention, provided with screening panels as shown in FIGS. 1-2B
FIG. 4 is a schematic perspective view of a screening panel for use on a band screen, pursuant to the present invention.
FIG. 5 is a longitudinal sectional view of a band screen provided with screening panels as illustrated in FIG. 4.
FIG. 6 is a partial elevational view of a screening panel, showing geometry of a single panel aperture in accordance with the present invention,

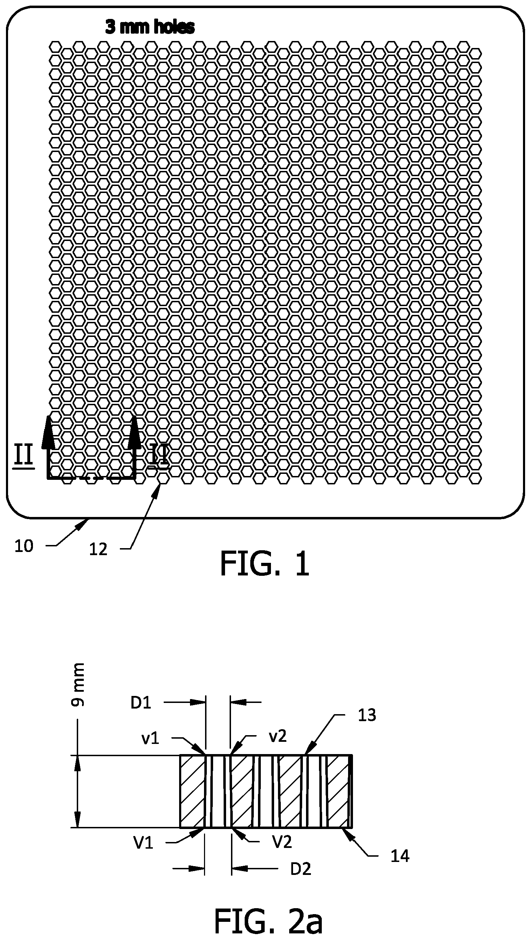

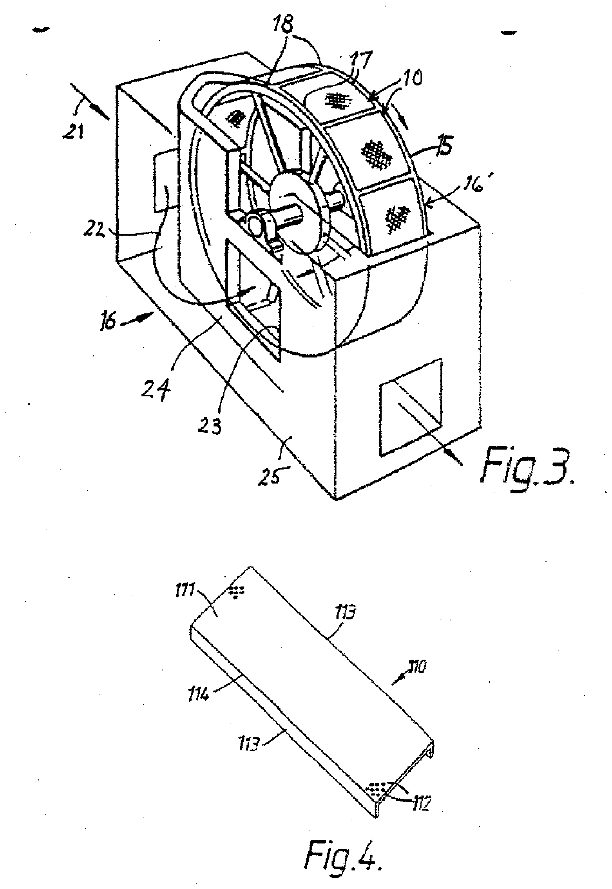

As depicted in FIG. 1, a screening panel 10 suitable for use on a rotating drum screen of the type illustrated in FIG. 3 is injection molded from polyurethane and formed with a plurality of apertures or through-holes 12. Each panel 10 is about 9 mm thick, has a length of about 1500 mm and a width of about 1000 mm.

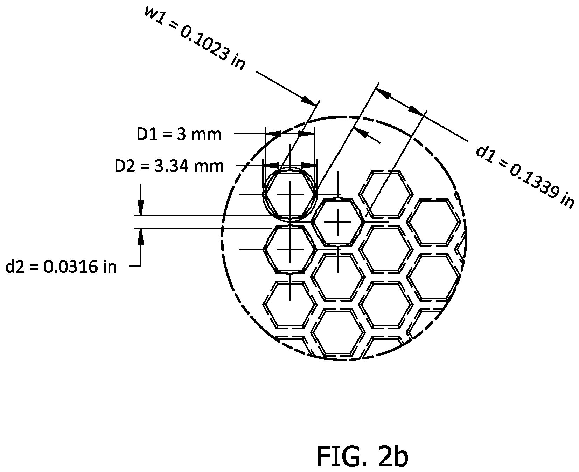

The molded apertures 12 occupy 54-58% or more of the total area of each panel 10 and are of hexagonal cross-section. Apertures 12 have a diameter D₁ of about 3 mm in an upstream major surface 13 of panel 10 and, as may be seen in FIG. 2A, flare outwardly with distance therefrom, to a diameter D₂ of about 3.3 mm on an opposing downstream major surface 14. The diameters are a maximum dimension of the apertures 12 at the major surfaces 13 and 14, measured from vertex to opposing vertex. The arrangement of the apertures 12 is as shown in FIG. 2B, where apertures 12 have a center-to-center spacing d₁ of 0.1339 in. and edge-to-edge spacing d₂ of 0.0316 in. Each aperture 12 has a width w_{1,} between opposing parallel edges, of 0.1023 in. or 2.5984 mm.

Screening panels 10 are mounted as a single row about a periphery 16 of a 5 m diameter rotary conveyor or drum 16' of screen apparatus 15, so that longer edges 17 of the screening panels 10 extend around a circumference of the conveyor or drum. In some cases, two or more such rows of panels may be preferred. As indicated by arrows 21, 22 in FIG. 3, liquid flows into an outer tank 16 and enters an inner housing 24 of the rotary drum screen apparatus 16 through openings 23 in sides of the housing and flows outwardly through the screening panels 10, passing around a submerged part of the conveyor or drum. Thus, the upstream or screening side 13 of each panel 10 faces radially inwards, with apertures or through-holes 12 tapering from 3.3 to 3 mm radially inwards.

Rims 18 of rotary conveyor or drum 16' are finely sealed against the passage of debris, thereby permitting finer screening. The tapered configuration of apertures or through-holes 12 alleviates clogging. Moreover, the longitudinally continuous hexagonal transverse cross-section of apertures 12 strengthens the screening panels 10, creating a web of stress lines therein and facilitating a maximization of flow throughput per unit area of the screening panels. The tapered configuration of apertures 12 is, of course, particularly suited for use with rotary screen apparatus 16 where the liquid to be screened flows through the screening panels 10 in only one direction. A further advantage of the tapered hole construction is that it facilitates the removal of the panel from the mould.

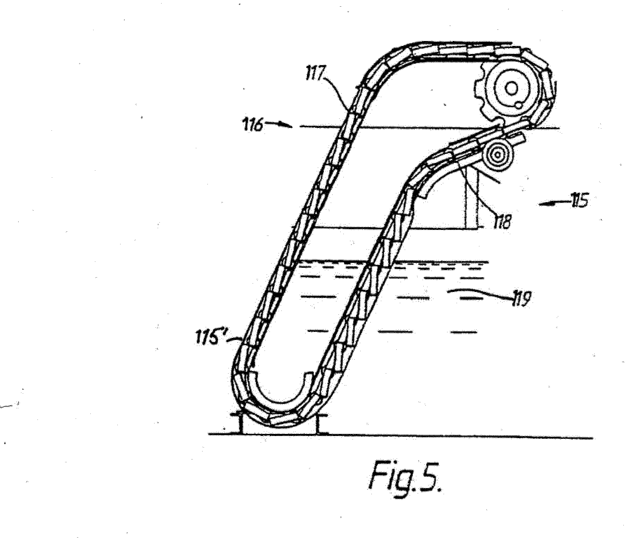

FIG. 4 shows an alternative type of screening panel 110 for use on a uniflow band screen apparatus 115 with a conveyor band 115', as illustrated in FIG. 5. Panel 110 is molded from polypropylene and comprises a rectangular screening face 111 provided with a plurality of hexagonal apertures 112 therein, and two solid edge faces flanges 113 extending perpendicularly away from longer edges 114 of screening face 111, respectively. Panel 110 has a length of about 80 cm, a width of about 20 cm, and a thickness of 9 mm, the edge faces or flanges 113 each having a width of about 12to 24 mm.

Apertures or through-holes 112 in screening face 111 are formed during the molding process. Each aperture 112 has a hexagonal cross-section that tapers down continuously from a trailing or downstream side of panel 110 to an upstream or leading side thereof. Apertures or through-holes 112 have dimensions as discussed above with reference to FIGS. 1-3. The apertures 12 are arranged in rows about 7 mm apart, the centers of adjacent apertures in a row being separated by about 12 mm, adjacent apertures in alternate rows being offset by 6 mm. The apertures occupy more than 50% and up to 60% of the effective screening area.

As shown in FIG. 5, each panel 110 is pivotally mounted lengthwise across the screen apparatus 115, with edge faces 113 directed towards the interior of the screen so that the screening faces 111 of the panels face outwardly around the panel belt. In this band screen, cam means (not shown) are provided on the sides of the panels and travel along inner and outer guide tracks disposed around the path of the belt of panels so as to control the orientations of the panels 110.

During operation of band screen apparatus 115, on an upgoing side 116 of the panel belt, the leading edge faces 113 of panels 110 are caused to move outwardly to form rising steps 117 that lift debris out of the flow. At the top of the screen, those edge faces 113 move inwardly again, causing the debris to be knocked off the panels. The panels 110 are then caused to flatten to form a smooth surface 118, whereupon the panels are brushed and backwashed to remove finer screenings. The panels 110 then move downwardly and re-enter the flow 119 in the reverse orientation.

Screening panels as disclosed herein, with particular reference to panels 10 and 110, are utilizable with other types of screening apparatus such as Ovivo's center-flow Brackett Green^{®} CF200 and CF100 Band Screens (CF standing for Center Flow). In the center flow pattern of the CF200 Band Screen, liquid enters the center of the screening apparatus and flows radially outwardly through a band of polymer mesh panels moving along an endless path in a screen head section of the apparatus. Screened or filtered material is retained on an inner side of the mesh panel band and discharged by low-pressure water jets at deck level during a cleaning cycle. Water jets are mounted on a jet pipe inside the screen head section. During the cleaning cycle, these jets continuously spray the panels as they pass a discharge station above a debris hopper.

As depicted in the drawings and described above, a screening apparatus 16 or 115 for removing solid material from a flowing liquid, exemplarily useful in wastewater treatment facilities, includes a plurality of screening panels 10 or 110, and a conveyor 16' or 115', the screening panels being mounted to the conveyor for travel around an endless path passing into and out of the flowing liquid. Each of the screening panels has an upstream-facing major surface 13 and a downstream-facing major surface 14 in parallel relation to one another. Each of the screening panels 10 or 110 is mounted to the respective conveyor 16' or 115' so that upstream major surface 13 faces the flowing liquid, with downstream major surface 14 facing in a direction of flow of the flowing liquid. Each screening panel 16' and 115' is molded from a polymeric material and is provided with a plurality of apertures. Apertures 12 and 112 each extend through a respective panel 10, 110 from upstream major surface 13 to downstream major surface 14 to thereby permit liquid flow through the apertures. Apertures 12 and 112 each have a hexagonal cross-section in at least one of the major surfaces 13 and 14 and preferably through the lengths of the apertures. Each aperture 12, 112 has a first maximum transverse dimension at the upstream major surface 13, the transverse dimension (e.g. width) of the apertures 12, 112 increasing progressively from the upstream major surface 13 towards the downstream major surface and having a second maximum transverse dimension at the downstream major surface 14 greater than the first maximum transverse dimension at the upstream surface of the respective screening panel 10, 110.

In a particular embodiment, screening panels 10, 110 each have a thickness of approximately 9 mm and the apertures have a decreasing taper of 0.3 to 0.5 mm from the downstream major surface 14 depending on aperture size to the upstream major surface 15, while the apertures in this example each have a first maximum transverse dimension of 3 mm, vertex V₁ to opposing vertex V₂, at the downstream major surface 14 and a second maximum transverse dimension of 3 mm, vertex v1 to opposing vertex v2, at the upstream major surface 13.

Preferably, apertures 12, 112 are equispaced from each neighboring or adjacent aperture. The apertures 12, 112 form a honeycomb grid or pattern (see FIG. 1), each of the apertures internal to the honeycomb or hexagonal pattern having six angularly equispaced hexagonal neighbor apertures.

Each screening 12, 112 panel provides an increase in aggregate flow-through area of 9-16% over a screening panel of equal size having conical or cross-sectionally circular apertures.

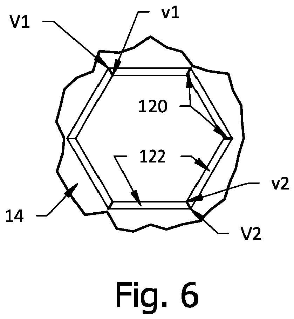

Apertures 12, 112 have a hexagonal cross-section along their entire lengths between upstream major surface 13 and downstream major surface 14. As shown in FIG. 6, apertures 12, 112 have internal linear groins or intersection loci 120 where internal planar walls 122 of the apertures conjoin one another. It is believed that the longitudinally continuous hexagonal transverse cross-section strengthens the screening panels, by generating multitudinous stress conduction paths. The enhanced strength enables a maximization of flow throughput per unit area of the screening panels 12,112 and consequently an optimal efficiency for screen filters or apparatus 16, 115.

## Claims

1. A screening apparatus for removing solid material from a flowing liquid, comprising:
a plurality of screening panels;
a conveyor, the screening panels being mounted to the conveyor for travel around an endless path passing into and out of the flowing liquid;
each of the screening panels having a first major surface and a second major surface in parallel relation to one another, each of the screening panels being mounted to the conveyor so that the first major surface faces the flowing liquid, and the second major surface faces in a direction of flow of the flowing liquid, and each screening panel being molded from a polymeric material and being provided with a plurality of apertures; and
the apertures each extending through each panel from the first major surface to the second major surface to thereby permit liquid flow through the apertures, the apertures each having a hexagonal cross-section in at least one of the first major surface and the second major surface, each of the apertures having a first maximum transverse dimension at the first major surface with a transverse dimension increasing progressively from the first major surface towards the second major surface, each of the apertures having a second maximum transverse dimension greater than the first maximum transverse dimension at the second major surface of the respective screening panel.

2. The apparatus defined in claim 1 wherein the screening panels each have a thickness of approximately 9 mm and wherein the apertures have a taper of 0.3 to 0.5 mm from the second major surface to the first major surface.

3. The apparatus defined in claim 1 wherein each of the apertures has a first maximum transverse dimension of 3.3 mm, vertex to opposing vertex, at the second major surface and a second maximum transverse dimension of 3 mm, vertex to opposing vertex, at the first major surface.

4. The apparatus defined in claim 1 wherein the apertures are equispaced from each neighboring one of the apertures.

5. The apparatus defined in claim 1 wherein the apertures form a honeycomb grid or pattern, each of the apertures internal to the grip or pattern having six angularly equispaced neighbor apertures.

6. The apparatus defined in claim 1 wherein each of the screening panels provides an increase in aggregate flow-through area of 9-16% over a screening panel of equal size having conical or cross-sectionally circular apertures.

7. The apparatus defined in claim 1 wherein the apertures have a hexagonal cross-section along their entire lengths from the first major surface to the second major surface.

8. A screening panel for use in the apparatus of claim 1 wherein the screening panel is mountable to said conveyor for travel around said endless path passing into and out of the flowing liquid, the screening panel comprising:
a first major surface and a second major surface in parallel relation to one another,
said screening panel being molded from a polymeric material and provided with a plurality of apertures,
the apertures each extending through said screening panel from the first major surface to the second major surface to thereby permit liquid flow through the apertures,
the apertures each having a hexagonal cross-section in at least one of the first major surface and the second major surface,
each of the apertures having a first maximum transverse dimension at the first major surface with a transverse dimension increasing progressively from the first major surface towards the second major surface,
each of the apertures having a second maximum transverse dimension greater than the first maximum transverse dimension at the second major surface.

9. The screening panel defined in claim 8 wherein said first major surface and said second major surface are spaced by a panel thickness of approximately 9 mm and wherein the apertures have a taper of 0.3 to 0.5 mm from the second major surface to the first major surface.

10. The screening panel defined in claim 8 wherein each of the apertures has a first maximum transverse dimension of 3.3 mm, vertex to opposing vertex, at the second major surface and a second maximum transverse dimension of 3 mm, vertex to opposing vertex, at the first major surface.

11. The screening panel defined in claim 8 wherein the apertures are equispaced from each neighboring one of the apertures.

12. The screening panel defined in claim 8 wherein the apertures form a honeycomb grid or pattern, each of the apertures internal to the grip or pattern having six angularly equispaced neighbor apertures.

13. The screening panel defined in claim 8 wherein said screening panel provides an increase in aggregate flow-through area of 9-16% over a screening panel of equal size having conical or cross-sectionally circular apertures.

14. The screening panel defined in claim 8 wherein the apertures have a hexagonal cross-section along their entire lengths from the first major surface to the second major surface.
